Europäisches Patentamt

European Patent Office

Office européen des brevets

(19)

(11) Numéro de publication : **0 446 135 A1**

(12)                    **DEMANDE DE BREVET EUROPEEN**

(21) Numéro de dépôt : **91400623.4**

(51) Int. Cl.⁵ : **B65G 35/06**

(22) Date de dépôt : **07.03.91**

(30) Priorité : **08.03.90 FR 9002938**

(43) Date de publication de la demande :
**11.09.91 Bulletin 91/37**

(84) Etats contractants désignés :
**AT BE CH DE DK ES GB GR IT LI LU NL SE**

(71) Demandeur : **SYPRIM AIR INDUSTRIE
ENVIRONNEMENT
27-31 Boulevard de la Paix
F-78100 Saint Germain en Laye (FR)**

(72) Inventeur : **Montagne, Claude
6, rue des Maraîchers
F-95130 Le Plessis Bouchard (FR)**
Inventeur : **Poirot, Jean-Paul
7, route de Marq
F-78470 Auteuil-le-Roi (FR)**

(74) Mandataire : **Fontanié, Etienne
FIVES-CAIL BABCOCK 38, rue de la
République
F-93100 Montreuil (FR)**

(54) Installation de transport comportant une voie de roulement constituée par des rouleaux ou des galets motorisés.

(57)    L'invention a pour objet une installation de transport comportant une voie de roulement constituée par des rouleaux ou des galets motorisés et munis de boudins de guidage et au moins un plateau porte-charge supporté par lesdits rouleaux ou galets qui assurent son déplacement le long de la voie.
    Pour pouvoir implanter la voie de roulement d'une telle installation au-dessous du niveau du sol, pour des raisons de sécurité et/ou pour ne pas gêner la circulation, chaque plateau porte-charge (50) est muni d'une semelle (52) qui repose sur lesdits rouleaux ou galets (24) et dont la largeur est sensiblement égale à l'écartement axial entre boudins, ledit plateau porte-charge (50) étant relié à sa semelle (52) par une nervure verticale (54) située dans le plan de symétrie longitudinal du plateau, ladite voie de roulement est constituée par une gaine (18, 20) dans laquelle sont logés lesdits rouleaux ou galets (24) et la semelle (52) du plateau porte-charge (50) se trouve à l'intérieur de ladite gaine tandis que le plateau proprement dit se trouve à l'extérieur, une fente longitudinale (22) étant ménagée dans ladite gaine pour le passage de la nervure (54) du plateau.

EP 0 446 135 A1

Fig.2.

# INSTALLATION DE TRANSPORT COMPORTANT UNE VOIE DE ROULEMENT CONSTITUEE PAR DES ROULEAUX OU DES GALETS MOTORISES

La présente invention a pour objet une installation pour le transport de charges isolées comportant une voie de roulement constituée par des rouleaux ou galets motorisés munis de boudins et au moins un plateau porte-charge supporté et guidé par lesdits rouleaux ou galets qui assurent aussi son déplacement le long de la voie; celle-ci peut être découpée en un certain nombre de sections indépendantes munies chacune d'un moteur entraînant les rouleaux ou galets en rotation, éventuellement par l'intermédiaire d'un embrayage, le moteur et/ou l'embrayage pouvant être commandé manuellement ou automatiquement pour arrêter une charge dans une portion quelconque de la voie de roulement, par exemple pour transférer la charge vers un poste d'utilisation ou de stockage ou pour éviter une collision entre deux plateaux porte-charge.

Le but de la présente invention est de permettre l'utilisation d'un équipement du type décrit ci-dessus dans une zone, par exemple un atelier de fabrication, où la voie de roulement doit être implantée au-dessous du niveau du sol et couverte pour ne pas gêner la circulation et/ou pour des raisons de sécurité.

L'installation objet de la présente invention est caractérisée en ce que chaque plateau porte-charge est muni d'une semelle à laquelle il est relié par une nervure verticale située dans le plan de symétrie longitudinal du plateau, et en ce que les rouleaux ou galets sont logés dans une gaine comportant sur sa paroi supérieure une fente longitudinale pour le passage de ladite nervure, ladite semelle se trouvant à l'intérieur de la gaine et le plateau porte-charge à l'extérieur. Cette solution permet, en particulier, de réaliser une installation pour le transport de charges lourdes dans laquelle les plateaux se déplacent au ras du sol, la gaine étant enterrée, ce qui facilite le chargement et le déchargement des plateaux. Chaque section de la voie de guidage peut, par exemple, être formée d'une auge prismatique à section en U dans laquelle sont logés les rouleaux ou galets dont les paliers sont fixés sur les parois latérales de l'auge; cette auge est placée dans un caniveau creusé dans le sol et l'auge et le caniveau sont fermés par des plaques situées au niveau du sol et ménageant entre elles une fente longitudinale pour le passage des nervures liant les plateaux aux semelles. Des logements sont prévus dans le caniveau pour les groupes moto-réducteurs entraînant les rouleaux ou galets de chaque section de voie.

Suivant une autre caractéristique de l'invention, les plateaux porte-charge sont équipés d'un organe d'enregistrement magnétique qui peut recevoir des informations codées relatives à la charge portée par le plateau et à sa destination, et des têtes de lecture réparties le long de la voie de roulement et reliées à une unité centrale permettant de suivre la charge tout au long de son trajet et de la diriger automatiquement vers son lieu de destination.

Chaque section de voie est, par ailleurs, équipée d'un détecteur inductif de présence qui n'autorise l'avance d'un plateau sur une section quelconque que si la section de voie suivante est libre, pour éviter les collisions entre plateaux.

On utilisera avantageusement des rouleaux ou galets débrayables permettant soit l'arrêt d'un plateau lorsque celui-ci heurte un obstacle, soit le déplacement du plateau par un opérateur en cas de panne d'un moteur.

D'autres caractéristiques de l'invention apparaîtront à la lecture de la description qui suit et se réfère aux dessins l'accompagnant qui montrent, à titre d'exemple non-limitatif, une forme de réalisation de l'invention et sur lesquels :

La figure 1 est le schéma d'une installation conforme à l'invention pour le transport de bobines de papier dans une imprimerie;

La figure 2 est une coupe transversale de la voie de roulement et d'un plateau porte-charge;

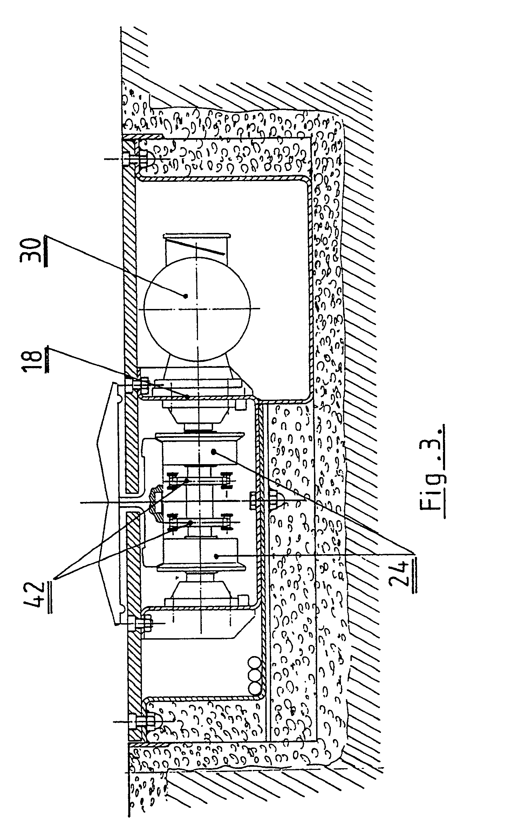

La figure 3 est une autre coupe transversale de la voie de roulement montrant le logement d'un groupe moto-réducteur; et

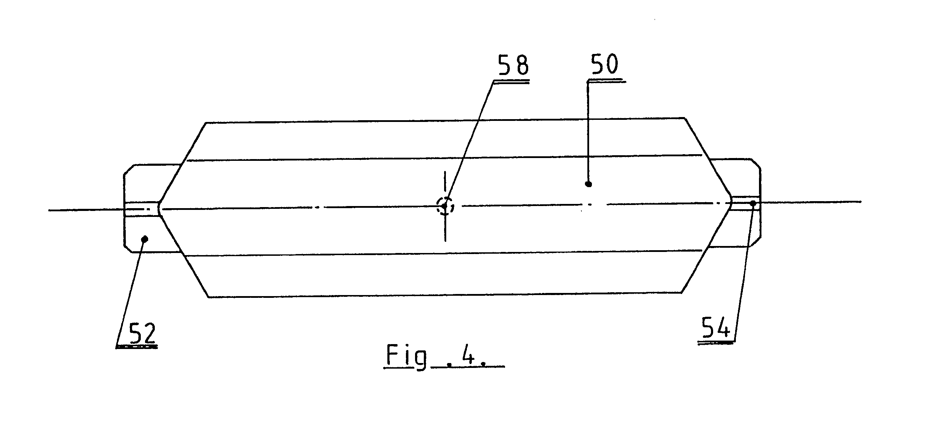

La figure 4 est une vue en plan d'un plateau porte-charge.

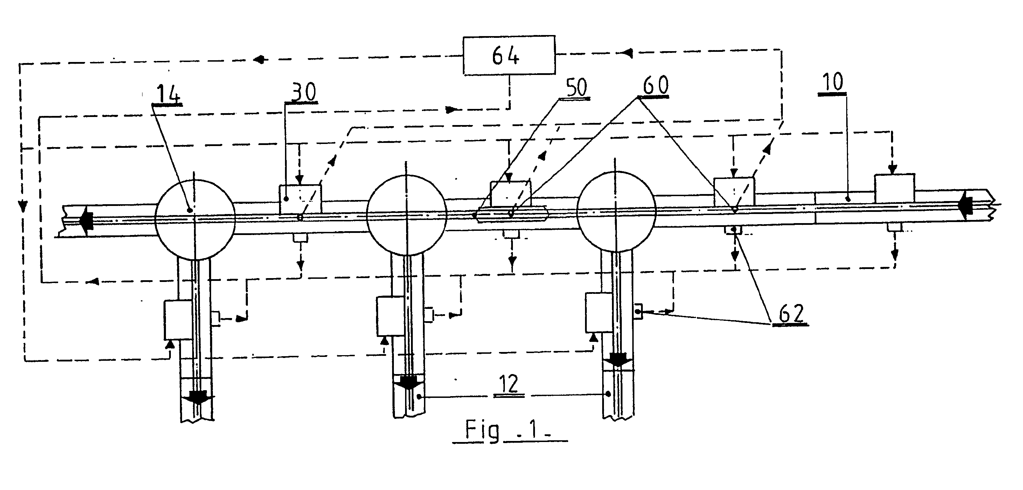

L'installation de transport représentée schématiquement sur la figure 1 relie une aire de stockage des bobines à différents postes de travail. Elle comporte une voie principale 10 et plusieurs voies secondaires 12; des plaques tournantes 14 assurent le transfert des bobines de la voie principale sur les voies secondaires. Les voies 10 et 12 sont découpées en plusieurs sections identiques de 3 à 4 mètres de long, suivant les impératifs d'implantation.

Chaque section est formée d'un caisson en tôle 16 logé dans un caniveau creusé dans le sol de l'atelier et d'une auge en tôle, à section en U, 18 fixée sur le fond du caisson. Les bords supérieurs du caisson et de l'auge sont situés au même niveau, et sont munis de rebords sur lesquels viennent se fixer des tôles 20 qui affleurent le sol et qui recouvrent le canal en ménageant une fente 22 entre leurs bords intérieurs.

A l'intérieur de l'auge 18 sont logés des galets 24 à axe horizontal formant une voie de roulement. Ces galets sont montés deux par deux et de manière symétrique sur des arbres 26 supportés à leurs extrémités par des paliers 28 fixés sur les parois latérales de l'auge. L'un des arbres 26 est accouplé à un groupe moto-réducteur 30 logé dans le caisson 16 et chaque arbre est relié aux arbres voisins par des chaines et des pignons 42 placés entre les deux rangées de galets. Les galets sont entraînés par les arbres respectifs au moyen d'un accouplement à friction fonctionnant en limiteur de couple.

Sur les voies 10 et 12 peuvent se déplacer des plateaux porte-charge 50 de forme allongée, munis d'une semelle 52 qui repose sur les galets 24. Ceux-ci sont munis, vers l'extérieur, de boudins 44, à face intérieure tronconique, qui coopèrent avec les bords biseautés de la semelle pour assurer le guidage latéral du plateau, la largeur de la semelle étant sensiblement égale à l'écartement entre boudins.

Le plateau proprement dit, qui se trouve au-dessus des tôles de recouvrement 20, est lié à la semelle qui se trouve à l'intérieur du canal par une nervure verticale 54 située dans le plan de symétrie longitudinal du plateau et qui passe avec jeu dans la fente 22 ménagée entre les tôles 20.

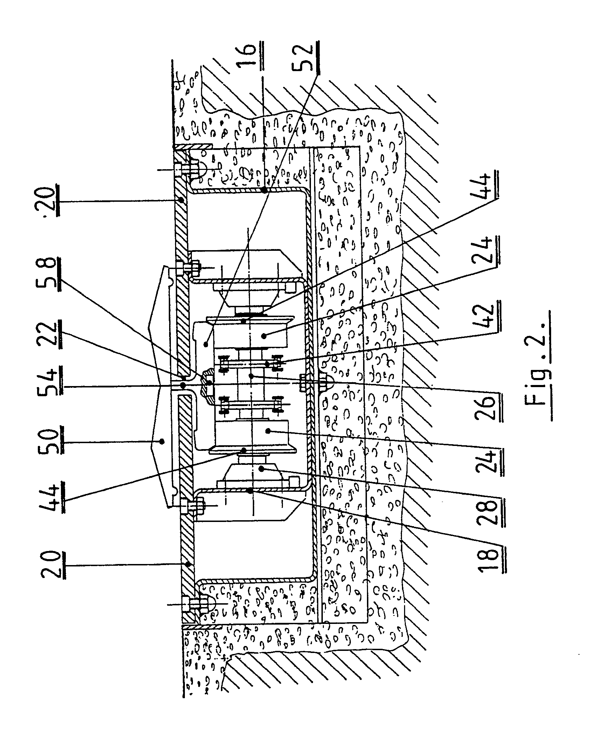

La figure 2 met en évidence la construction très simple des plateaux porte-charge et de la voie de roulement et la hauteur réduite de cette dernière qui permet de diminuer le coût des travaux de génie civil.

Les plaques tournantes 14 dont le diamètre n'est que légèrement supérieur à la longueur d'un plateau porte-charge sont constituées, comme les sections des voies 10 et 12, par un châssis en forme d'auge équipé de galets motorisés et recouvert par deux tôles en forme de demi-disque entre lesquelles est ménagée une fente pour le passage de l'âme des plateaux porte-charge. Le châssis est monté sur une couronne à billes et peut être entraîné en rotation par un groupe moto-réducteur dont l'arbre de sortie porte un pignon en prise avec une couronne dentée solidaire du châssis.

Les plateaux porte-charge sont équipés d'une puce magnétique 58 sur laquelle peuvent être inscrites, à la sortie de l'aire de stockage, des informations relatives à la bobine transportée et à sa destination.

Les sections de voie et les tables tournantes sont équipées d'une tête de lecture 60 et d'un détecteur de présence inductif 62 qui sont reliés à une unité centrale de commande 64. Cette unité est par ailleurs reliée aux moteurs 30 des différentes sections et des tables tournantes.

Les têtes de lecture lisent, au passage du plateau, les informations codées enregistrées sur la puce et les transmettent à l'unité centrale. Lorsqu'un plateau se trouve sur la table tournante desservant la voie secondaire sur laquelle la bobine doit être dirigée, l'unité centrale commande l'arrêt du moteur entraînant les galets de la table, la rotation de 90 de la table, puis la remise en marche des galets de la table.

Il est bien entendu que toutes les modifications qui peuvent être apportées au mode de réalisation décrit par la substitution de moyens techniques équivalents entrent dans le cadre de l'invention.

## Revendications

1. Installation de transport comportant une voie de roulement constituée par des rouleaux ou des galets motorisés et munis de boudins de guidage et au moins un plateau porte-charge supporté par lesdits rouleaux ou galets qui assurent son déplacement le long de la voie, caractérisé en ce que chaque plateau porte-charge (50) est muni d'une semelle (52) qui repose sur lesdits rouleaux ou galets (24) et dont la largeur est sensiblement égale à l'écartement axial entre boudin (44), ledit plateau porte-charge (50) étant relié à sa semelle (52) par une nervure verticale (54), en ce que ladite voie de roulement est constituée par une gaine (18, 20) dans laquelle sont logés lesdits rouleaux ou galets (24) et en ce que la semelle (52) du plateau porte-charge (50) se trouve à l'intérieur de ladite gaine tandis que le plateau proprement dit se trouve à l'extérieur, une fente longitudinale (22) étant ménagée dans ladite gaine pour le passage de la nervure (54) du plateau.

2. Installation selon la revendication 1, caractérisée en ce que ladite voie de roulement est découpée en plusieurs sections et chaque section est formée d'une auge prismatique à section en U (18) dans laquelle sont logés lesdits rouleaux ou galets (24) dont les paliers sont fixés sur les parois latérales de l'auge, en ce que les auges sont placées bout à bout dans un caniveau creusé dans le sol et les auges et le caniveau sont recouverts par des tôles (20) affleurant le sol et en ce qu'une fente longitudinale (22) est ménagée entre les bords des tôles pour le passage de la nervure (54) du plateau porte-charge.

3. Installation selon les revendications 1 ou 2, caractérisée en ce que le plateau porte-charge est équipé d'un organe d'enregistrement magnétique (58) pouvant recevoir des informations codées relatives à sa charge, et en ce que des têtes de lecture (60) réparties le long de la voie de roulement permettent de lire ces informations et de les transmettre à une unité centrale (64) qui commande les moteurs (30) entraînant les rouleaux ou galets (24).

4. Installation selon les revendications 2 et 3, caractérisée en ce que chaque section de la voie de roulement est équipée d'un détecteur de présence (62) relié à l'unité centrale (64).

5. Installation selon l'une quelconque des revendications précédentes, caractérisée en ce que lesdits rouleaux ou galets (24) sont montés sur des arbres (26) entraînés par des moteurs (30) et un accouplement à friction constituant un limiteur de couple est interposé entre chaque rouleau ou galet et l'arbre respectif.

Fig. 1

EP 0 446 135 A1

Fig.2.

30

18

42

24

Fig. 3.

EP 0 446 135 A1

58  50

52

54

Fig. 4.

EP 0 446 135 A1

**Office européen des brevets**

# RAPPORT DE RECHERCHE EUROPEENNE

Numéro de la demande

EP  91 40 0623

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2182011 (TSUBAKIMOTO CHAIN) <br> * page 3, lignes 97 - 110; figures 3, 6 * <br> --- | 1, 2, 4, 5 | B65G35/06 |
| Y | EP-A-264254 (SONY) <br> * abrégé * <br> * colonne 7, lignes 41 - 48 * <br> * colonne 6, ligne 63 - colonne 7, ligne 4; figures 5-8 * <br> --- | 1, 2, 4, 5 | |
| A | EP-A-255620 (DÜRR GMBH) <br> * abrégé; figures 2, 3 * <br> --- | 1, 2 | |
| A | WO-A-8910234 (KUMETH) <br> * page 13, dernier alinéa - page 14, ligne 15; figures 3-5 * <br> --- | 1-4 | |
| A | WO-A-8807490 (STICHT) <br> * abrégé; figures 1-4 * <br> ----- | 1, 2 | |
| | | | **DOMAINES TECHNIQUES RECHERCHES (Int. Cl.5)** <br><br> B65G |

Le présent rapport a été établi pour toutes les revendications

| Lieu de la recherche | Date d'achèvement de la recherche | Examinateur |
|---|---|---|
| LA HAYE | 11 JUIN 1991 | NEVILLE D.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10